# FASCICULE DE BREVET EUROPEEN

(11) **EP 1 295 081 B1**
(45) Date de publication et mention de la délivrance du brevet: **03.11.2004**
(21) Numéro de dépôt: 00936587.5
(22) Date de dépôt: 27.06.2000
(51) Int. Cl.: G01B 3/20, G01B 7/00

(54) **DISPOSITIF DE MESURE A ELECTRODES MAGNETORESISTIVES**
MESSVORRICHTUNG MIT MAGNETORESISTIVEN ELEKTRODEN
MAGNETORESISTIVE ELECTRODE MEASURING DEVICE

(43) Date de publication de la demande: 26.03.2003
(73) Titulaire: TESA SA, 1020 Renens (CH)
(72) Inventeur: JORDIL, Pascal, CH-1612 Ecoteaux (CH)
(74) Mandataire: Saam, Christophe
(86) Numéro de dépôt international: PCT/CH2000/000348
(87) Numéro de publication internationale: WO 2002/001144

(56) Documents cités:
- EP-A- 0 493 260
- EP-A- 0 924 491
- US-A- 5 894 678
- US-A- 5 973 494
- US-A- 6 054 851
- PATENT ABSTRACTS OF JAPAN vol. 013, no. 520 (P-963), 21 novembre 1989 (1989-11-21) & JP 01 212313 A (SANKYO SEIKI MFG CO LTD), 25 août 1989 (1989-08-25)

## Description

La présente invention concerne un dispositif de mesure de dimension à électrodes magnétorésistives.

Des dispositifs électroniques de mesure de longueur ou de position angulaire en milieu industriel par exemple doivent généralement satisfaire plusieurs contraintes partiellement contradictoires. Ils doivent fournir une précision et une résolution suffisante, et être utilisables dans des environnements soumis à des vibrations ou à des pollutions telles que poussière, huile ou humidité. On attend également de ces capteurs une intégration aisée dans des appareils de faible volume, sans réglages ou adaptations importants, une vitesse de mesure élevée et une consommation électrique réduite pour un coût aussi bas que possible.

Différents types de dispositifs de mesure, basés sur différents principes physiques, ont été mis au point pour satisfaire ces exigences diverses. En particulier, des systèmes de mesure utilisant les variations de capacité provoquées par le déplacement d'un capteur en regard d'une règle ont été abondamment utilisés dans des dispositifs portables tels que calibres par exemple. Ces dispositifs doivent être maintenus assez propres pour fonctionner et sont donc mal adaptés à un fonctionnement dans un environnement humide ou sujet aux projections de lubrifiant ou d'huile de coupe par exemple. Des dispositifs de mesure de longueur basés sur le principe d'électrodes magnétorésistives ont été proposés par exemple dans le document de brevet DE4233331 (IMO), qui offrent une résistance bien supérieure aux salissures. Le dispositif décrit dans ce document comprend un capteur muni d'un réseau d'électrodes magnétorésistives reliées de manière à définir deux ponts de Wheatstone. Le capteur est monté sur un coulisseau et peut être déplacé face à une règle magnétisée avec une période de magnétisation λ. Un déplacement du capteur face à la règle provoque une modification du champ magnétique appliqué sur les diverses électrodes magnétorésistives du capteur, et donc une modification de leur résistance. En mettant les ponts de Wheatstone sous tension, on récolte à leur sortie un signal électrique fonction périodique de la position du capteur le long de la règle.

Les deux ponts de mesure sont constitués de quatre électrodes magnétorésistives déphasées de λ/2. Les électrodes correspondantes de chaque pont occupent des positions déphasées de λ/4. Les électrodes des deux ponts de mesure sont entremêlées. Ce document suggère en outre l'utilisation de structures de barberpoles, qui permettent de modifier la direction du vecteur de courant I. Comme la résistance d'une électrode magnétorésistive est fonction de l'angle entre le vecteur d'aimantation et le vecteur de courant, les structures de barberpole permettent de contrôler le sens et l'amplitude de la variation de résistance des électrodes provoquée par le déplacement du capteur.

Chaque branche du pont de mesure est constituée par une seule électrode magnétorésistive dont la largeur doit être suffisante pour réagir aux champs magnétiques relativement peu importants générés par la règle. La résistance des branches du pont est donc réduite, et des courants importants circulent à travers les ponts de mesure. La consommation électrique de ce dispositif est par conséquent importante.

Le document de brevet US5386642 (Heidenhain) décrit un capteur dans lequel les électrodes sont organisées en ponts de mesure dont chaque branche est constituée de plusieurs électrodes magnétorésistives de même phase et reliées en série. La résistance des branches du pont est ainsi plus importante, ce qui permet de réduire sensiblement la consommation électrique. La consommation de ce type de capteur reste toutefois trop importante pour envisager une utilisation dans des appareils électriquement autonomes, par exemple dans des calibres de précision portables.

Le document JP-01-212313-A décrit un circuit électronique apte à être utilisé dans un dispositif de mesure de dimension à électrodes magnétorésistives, dans lequel les électrodes magnétorésistives sont alimentées avec des sources de courant continu.

JP-A-61-173113 décrit une nouvelle manière de connecter des électrodes magnétorésistives dans un dispositif de mesure de dimension angulaire, afin de réduire la consommation électrique. La réduction de consommation est due à une connexion particulière des électrodes.

EP0924491 décrit un circuit électronique pour dispositif de mesure de dimension de type magnétorésistif dans lequel l'alimentation des ponts de mesure est périodiquement réduite ou interrompue, de façon à limiter la dissipation d'énergie dans les électrodes magnétorésistives. En alimentant les ponts de mesure avec un rapport cyclique de 1/n, on parvient ainsi à diviser par n la consommation électrique dans les électrodes.

Ce circuit décrit également un circuit de mode de veille permettant de réduire la consommation électrique lorsque le dispositif n'est pas utilisé. En mode de veille, l'affichage et le contrôleur du circuit sont débranchés, la lecture de la mesure est donc impossible. Ces composants sont ensuite réveillés lorsqu'un déplacement du capteur est détecté au moyen des électrodes magnétorésistives qui doivent donc rester sous tension.

Le mode de veille décrit dans EP0924491 est donc peu avantageux, puisque le dispositif mis en mode de veille est inutilisable pour afficher des mesures, mais continue néanmoins d'utiliser un courant important pour alimenter les électrodes magnétorésistives.

Un but de l'invention est de réaliser un dispositif de mesure à électrodes magnétorésistives différent des dispositifs de l'art antérieur, et dont la consommation électrique est égale ou moindre.

En particulier, un but de la présente invention est de réaliser un dispositif de mesure portable tel que pied à coulisse alimenté par batterie.

Selon l'invention, ces buts sont atteints au moyen d'un circuit présentant les éléments de la partie caractérisante de la revendication indépendante, des variantes étant en outre indiquées dans les revendications dépendantes.

L'invention sera mieux comprise à la lecture de la description donnée à titre d'exemple et illustrée par les figures suivantes:
La figure 1 représente une vue en éclaté d'un calibre électronique portable selon la présente invention.
La figure 2 montre un schéma électrique illustrant la manière dont les différentes électrodes du capteur sont connectées de manière à constituer deux ponts de mesure.
La figure 3 représente un chronogramme des signaux d'alimentation des ponts de mesure selon une première variante de l'art antérieur.
La figure 4 représente un chronogramme des signaux d'alimentation des ponts de mesure selon une deuxième variante de l'art antérieur.
La figure 5 représente un chronogramme des signaux d'alimentation des ponts de mesure selon une première variante de l'invention.
La figure 6 représente un chronogramme des signaux d'alimentation des ponts de mesure selon une deuxième variante de l'invention.
La figure 7 représente un chronogramme des signaux d'alimentation des ponts de mesure selon une troisième variante de l'invention.
La figure 8 représente un chronogramme des signaux d'alimentation des ponts de mesure selon une quatrième variante de l'invention.
La figure 9 représente un chronogramme des signaux d'alimentation des ponts de mesure selon une cinquième variante de l'invention.
La figure 10 représente un chronogramme des signaux d'alimentation des ponts de mesure selon une sixième variante de l'invention.
La figure 11 représente un chronogramme des signaux d'alimentation des ponts de mesure selon une septième variante de l'invention.
La figure 12 représente un chronogramme des signaux d'alimentation des ponts de mesure selon une huitième variante de l'invention.

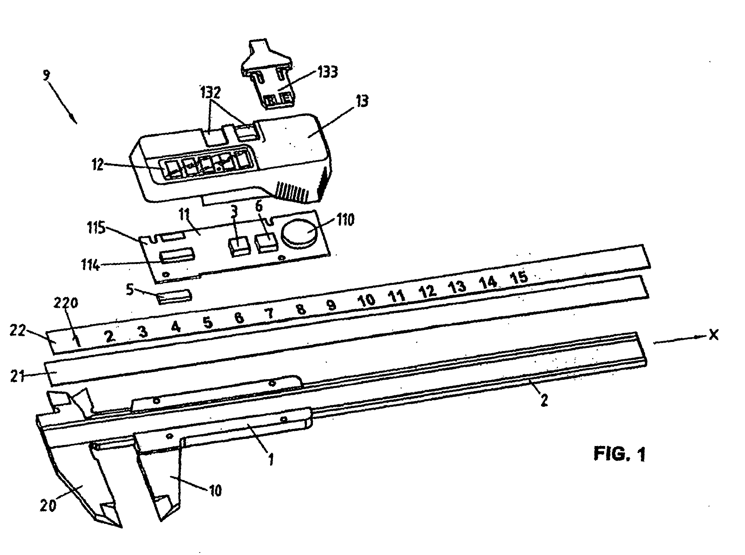

La figure 1 illustre en éclaté un calibre électronique portable selon la présente invention. La construction de tels calibres est connue et a été décrite par exemple dans la demande de brevet EP719999 au nom de la demanderesse.

Le calibre de l'invention comprend une perche 2 et un coulisseau 1 apte à être déplacé longitudinalement le long de la perche. Le coulisseau est muni d'un bec mobile 10 tandis que la perche est équipée d'un bec fixe 20. Une règle 21 en matériau magnétique permanent est fixée sur la perche 2 et munie d'une succession de régions magnétisées. La règle 21 est recouverte d'une couche protectrice en matériau non magnétique 22 munie d'une impression 220.

Des moyens électroniques, indiqués de manière générale par la référence 11, permettent d'afficher sur l'affichage électronique à cristaux liquides 12 une indication dépendant de la distance entre les becs 10 et 20 du calibre. Ces moyens électroniques sont assemblés directement sur la plaque de circuit imprimé 115. Ils comprennent principalement un capteur magnétorésistif 5 assemblé sous la plaque de circuit imprimé 115 en regard de la règle magnétique 21. Le capteur 5 comporte un réseau formé d'un nombre important d'électrodes magnétorésistives organisées en groupes, la valeur des diverses résistances du réseau étant une fonction périodique de la position du coulisseau 1 le long de la perche 2. Le capteur peut par exemple être du type décrit dans l'un des documents de brevets déjà mentionnés DE4233331 ou US5386642, ou de préférence tel que décrit dans la demande EP0877228 au nom de la demanderesse. Les moyens électroniques 11 comprennent en outre des moyens d'alimentation électrique autonome, dans l'exemple représenté une pile 110. La pile 110 est de préférence constituée par une pile plate au lithium et doit garantir plusieurs jours, de préférence même plusieurs mois de fonctionnement autonome au dispositif.

Un circuit électronique intégré 3, de type ASIC, détermine à partir des valeurs de résistance des électrodes magnétorésistives sur le capteur 5 au moins un paramètre dépendant de la distance entre les becs 10 et 20; le circuit électronique 3 est connecté à un microcontrôleur standard 6 qui contrôle le circuit 3 et commande l'affichage 12 pour afficher la distance mesurée. Les moyens électroniques 11 comprennent en outre de préférence un aimant de polarisation 114 monté sur la face supérieure du circuit imprimé 115, face au capteur 5.

Les moyens électroniques 11 sont protégés par un boîtier 13, des boutons 132 permettant de commander par exemple la mise en marche du calibre ou d'autres fonctions telles que remise à zéro, addition ou moyennage de mesures successives, etc.. Un connecteur optoélectronique sériel 133 est prévu comme interface entre le calibre 9 et des instruments extérieurs tels qu'imprimante, ordinateur personnel ou machine par exemple.

Le capteur magnétorésistif 5 comporte un grand nombre d'électrodes magnétorésistives dont les dimensions sont choisies de manière à obtenir une grande résistance et donc de réduire la consommation électrique du capteur.

Les différentes électrodes magnétorésistives sont disposées longitudinalement sur le capteur 5 de manière à occuper diverses positions de phase par rapport au champ magnétique généré par la règle 2. A une distance suffisante de la règle 2, le champ magnétique est une fonction approximativement sinusoïdale de la position du capteur sur l'axe x. Le champ magnétique produit par la règle 21 sur chaque électrode magnétorésistive du capteur est donc une fonction sinusoïdale de la position longitudinale de cette électrode ; la résistance de chaque électrode évolue de manière sinusoïdale lorsque le coulisseau 1 est déplacé le long de la perche. Le circuit de mesure 3, 6 détermine à l'aide de la valeur des différentes résistances magnétorésistives la position du coulisseau et affiche cette information sur l'affichage 12.

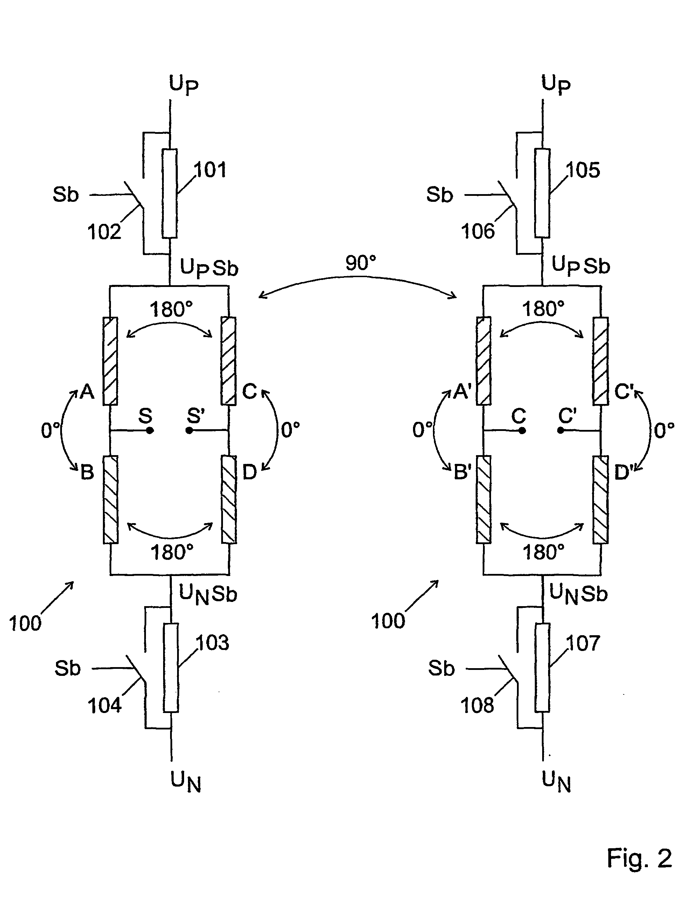

La figure 2 illustre de manière schématique un mode de connexion préférentiel des électrodes magnétorésistives. Les électrodes magnétorésistives sont connectées entre elles dans cet exemple de manière à définir deux ponts de mesure 100 (ponts de Wheatstone). Chaque branche du pont est constituée d'un jeu de plusieurs électrodes connectées en série, la phase des électrodes à l'intérieur de chaque jeu étant identique ou proche. Dans une variante préférentielle, chaque jeu comprend des électrodes positionnées avec des déphasages spatiaux de 180° mais avec des orientations de structures de barberpoles opposées, par exemple à +45° et -45°. Les électrodes correspondantes de chaque pont de mesure sont dans cet exempte déphasées de 90°. Chaque pont comporte quatre jeux d'électrodes magnétorésistives ABCD, respectivement A'B'C'D'. Des modes de connexion différents, par exemple avec un ou trois ponts de mesure, ou avec des déphasages différents entre les branches du pont, peuvent aussi être utilisés dans le cadre de cette invention.

Le nombre d'électrodes magnétorésistives par jeu est de préférence supérieur à 4 mais n'est limité que par la dimension du circuit intégré 5; dans un mode de réalisation de l'invention, le nombre d'électrodes magnétorésistives par jeu est égal à 72. Le nombre total d'électrodes magnétorésistives 100 sur le capteur 5, dans cet exemple non limitatif avec deux ponts de mesure constitués chacun de 4 jeux de 72 électrodes, est alors égal à 576.

Sur l'exemple illustré par la figure 2, le jeu d'électrodes A, respectivement A', est déphasé de 180° par rapport au jeu d'électrode C, respectivement C'. De la même façon, le jeu d'électrodes B, respectivement B', est déphasé de 180° par rapport au jeu d'électrode D, respectivement D'. Les jeux A, A', B, B' occupent les mêmes positions de phase que les jeux respectifs C, C', D, D'. Les électrodes magnétorésistives de chaque paire AB, A'B', CD, C'D' sont cependant munies de structures de barberpoles orientées de manière opposée, par exempte à +45° et -45°.

Selon l'invention, les deux ponts de mesure 100 sont alimentés entre les bornes U_{P} et U_{N} au travers de résistances 101, 103, 105 et 107; des interrupteurs 102, 104, 106 et 108 permettent de court-circuiter indépendamment chaque résistance. Lorsque tous les interrupteurs sont fermés, les deux ponts de mesure 100 sont donc directement alimentés avec les tensions u_{P} et u_{N}; en ouvrant tous les interrupteurs, les tensions appliquées passent à u_{P}sb, respectivement à u_{N}sb, en sorte que la différence de tension aux bornes des ponts diminue et que la consommation électrique est réduite. Dans une variante préférentielle de l'invention, les interrupteurs 102, 104, 106 et 108 sont tous commandés simultanément par le même signal sb; il est toutefois également possible, dans le cadre de cette invention, de commander ces interrupteurs indépendamment. De même, si plusieurs niveaux de consommation intermédiaires sont utiles, il est possible d'alimenter les ponts de mesure entre plusieurs résistances en série court-circuitables indépendamment.

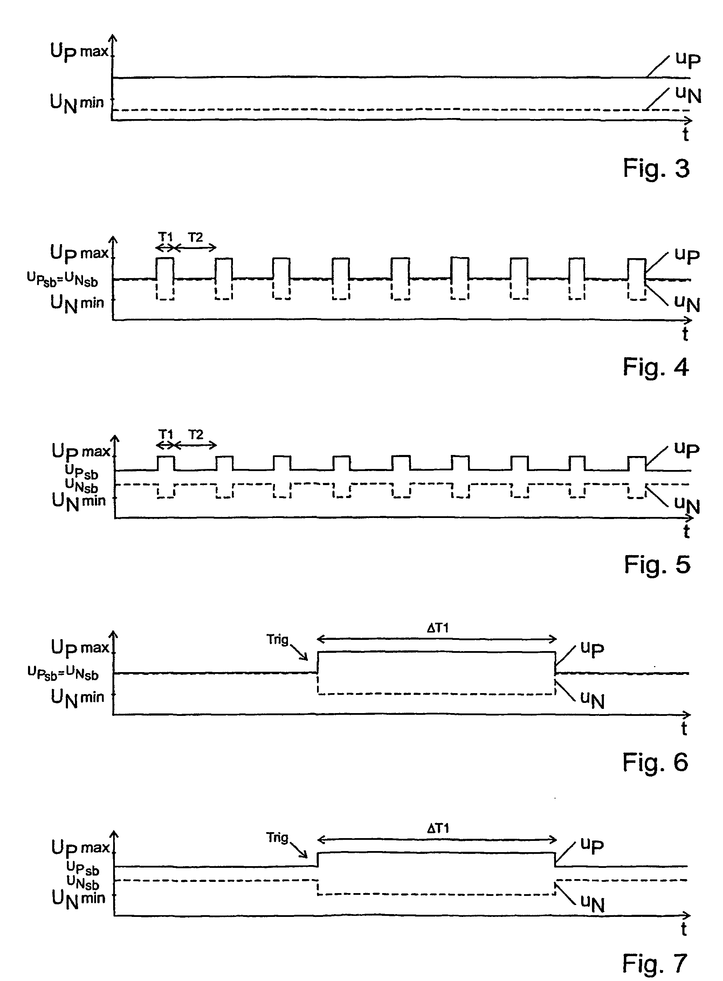

Lorsque le coulisseau 1 est déplacé en regard de la règle 21, les ponts de mesure livrent en retour des signaux différentiels c (entre les bornes C et C') et s (entre les bornes S et S') approximativement sinusoïdaux en fonction de la position du capteur, un signal étant déphasé de 90 degrés par rapport à l'autre. Ces signaux sont transmis au circuit électronique 3 qui, comme discuté plus bas en relation avec la figure 5, les amplifie et détermine à partir des signaux amplifiées la position du capteur. Le circuit électronique 3 contrôle en outre l'interface avec le clavier 132 ainsi qu'une interface optionnelle avec des appareils externes, par exemple une interface sérielle RS232 (133).

Le dispositif de mesure de l'invention comporte en outre de préférence une petite mémoire vive de paramètres (PRAM ou EEPROM), non représentée, pour mémoriser certains paramètres, tels que le choix de l'unité de mesure, l'état du circuit, le mode d'alimentation des ponts de actuellement utilisé, etc.. Cette zone de mémoire peut aussi être intégrée au circuit 3 ou au microcontrôleur 6.

Une description plus détaillée d'une variante possible de réalisation du circuit 3 est décrite dans la demande de brevet EP0924491.

Nous allons maintenant discuter, en relation avec les figures 3 à 12, différents procédés d'alimentation du circuit de l'invention.

Dans la variante de l'art antérieur illustrée sur la figure 3, une tension continue u_{P} de valeur U_{P}max (par exemple 3 Volts) est fournie sur la borne U_{P}sb tandis qu'une tension continue u_{N} différente de valeur U_{N}min (par exemple 0 Volts) est fournie au point U_{N}sb sur la borne U_{N}. Les deux ponts de mesure sont donc alimentés avec un seul mode utilisant une tension continue U_{P}max- U_{N}min, en sorte que la consommation électrique est constante et élevée. Cette variante ne convient donc pas à une utilisation dans des dispositifs portables alimentés par batterie, pour lesquels la consommation électrique est cruciale.

Une variante d'alimentation des ponts de mesure avec un mode d'alimentation pulsé est illustrée sur la figure 4. Dans cette variante, le potentiel appliqué au point Uₚsb varie entre le potentiel maximal Uₚmax et le potentiel inférieur Uₚsb (par exemple entre Vdd et Vdd/2). Le potentiel du point U_{N}sb varie entre U_{N}sb = Uₚsb et U_{N}min (par exemple entre Vdd/2 et Vss = 0 Volts). Le rapport cyclique est constant et vaut T1/(T1+T2).

En négligeant les pertes de commutation et la consommation de la logique séquentielle, ce mode d'alimentation permet de réduire la consommation électrique dans les électrodes par un facteur égal au rapport cyclique. Les variations de potentiel à chaque cycle sont réparties entre les deux bornes U_{P} et U_{N}, afin d'éviter aux amplificateurs fournissant les signaux u_{P} et u_{N} de subir des sauts de tensions trop importants. Il est ainsi possible d'utiliser des amplificateurs d'entrée dont le taux de rejection en mode commun (CMRR) est moins critique. En outre, cette répartition des variations de tension permet de réduire la consommation due à la charge/décharge des capacités parasites ainsi que le temps de commutation entre les intervalles d'alimentation et les intervalles de réduction d'alimentation, et de compenser le couplage parasite occasionné par les transitions du signal Uₚ par les transitions complémentaires de Uₙ.

Les signaux uₚ et uₙ sont fournis par une logique séquentielle non représentée, à partir des signaux d'horloge d'un oscillateur non représenté. Le rapport de cycle entre les intervalles d'alimentation et les intervalles de réduction d'alimentation peut être modifié à l'aide de registres de commande appropriés dans l'électronique 3. Par exemple, deux bits dans l'un de ces registres permettent de sélectionner quatre rapports de cycle opératoire : 100% (toujours alimenté), 50%, 25% (comme représenté) et 0% (complètement arrêté).

Par rapport à l'alimentation continue illustrée sur la figure 3, cette variante permet de réduire la consommation électrique dans les électrodes. Le facteur de réduction T1/(T1+T2) ne peut toutefois pas être choisi librement: pendant les intervalles T2 d'interruption d'alimentation, aucune détection du déplacement du capteur n'est possible, en sorte que la valeur affichée pendant ces intervalles peut s'avérer incorrecte. Par ailleurs, dans le cas fréquent où la disposition et le codage des électrodes ne permet pas une mesure absolue de la position, mais seulement une mesure différentielle, la position absolue est perdue lorsque le capteur est déplacé pendant les intervalles T2, ce qui entraîne des erreurs dans les mesures ultérieures. Il est donc nécessaire de choisir une valeur de T2 suffisamment faible pour garantir que les moindres déplacements du capteur seront détectés et que la référence de position ne sera pas perdue.

Une autre variante d'alimentation des ponts de mesure selon l'invention est illustrée sur la figure 5. Selon cette variante, les ponts de mesure sont alimentés pendant les intervalles d'alimentation de durée T1 entre le potentiel maximal Uₚmax et le potentiel U_{N}min, et pendant les intervalles de réduction d'alimentation T2 entre Uₚsb et U_{N}sb, Uₚsb étant supérieur à U_{N}sb. La commutation entre les intervalles d'alimentation T1 et les intervalles de réduction d'alimentation T2 est effectuée en actionnant les interrupteurs 102, 104, 106 et 108 au moyen du signal sb. Les ponts de mesure sont ainsi alimentés avec un seul mode puisé dans lequel la tension aux bornes est toujours au moins égale à Uₚsb - U_{N}sb, ces valeurs étant choisies de manière à permettre une mesure grossière et sans interpolation de la position.

Par rapport à la variante de l'art antérieur illustrée sur la figure 4, cette solution permet de détecter les déplacements du capteur et de conserver la position absolue du capteur même pendant les intervalles T2 de réduction d'alimentation. Il est donc possible de choisir un rapport cyclique T1/(T1+T2) beaucoup plus faible, et ainsi de limiter les intervalles T1 pendant lesquels la tension maximale est appliquée. La puissance électrique consommée étant proportionnelle au carré de la différence de tension entre les bornes U_{P} et U_{N}, il est ainsi possible, selon les valeurs choisies pour T1, T2, Uₚsb et U_{N}sb d'obtenir une réduction supplémentaire de la consommation par rapport à la variante illustrée sur la figure 4.

Dans les variantes illustrées jusqu'ici, les ponts de mesure sont alimentés avec un seul mode continu ou pulsé. La consommation moyenne reste donc constante lorsque le calibre est en marche, qu'il soit utilisé ou non. Il a toutefois été constaté dans le cadre de cette invention que les utilisateurs laissent souvent leur calibre allumé pendant plusieurs heures, bien que la durée effective d'utilisation ne représente généralement qu'une fraction de la période pendant laquelle le calibre reste enclenché.

Un dispositif de mesures à électrodes magnétorésistives muni d'un circuit de mode de veille a déjà été décrit dans la demande de brevet EP0924491 déjà mentionnée. Toutefois, dans ce document, les électrodes magnétorésistives restent alimentées même lorsque le dispositif est en mode de veille; la consommation électrique reste donc importante.

La figure 6 présente une variante de l'invention qui permet de réduire la consommation électrique en tenant compte de cette observation. Cette variante utilise deux modes d'alimentation des ponts de mesure. Dans le premier mode, les ponts de mesure 100 sont débranchés, c'est-à-dire que la tension appliquée à la borne supérieure U_{P}sb est égal à la tension appliquée à la borne inférieure U_{N}sb.

L'alimentation des ponts de mesure passe dans un deuxième mode dès qu'une manipulation du dispositif, par exemple un déplacement du capteur ou l'actionnement d'une touche de commande, est détectée. Dans ce cas, un signal Trig est généré qui entraîne, au moyen d'un circuit logique non représenté, une modification de la tension appliquée sur les bornes U_{P}sb et U_{N}sb, qui passent respectivement à U_{P}max et U_{N}min, en sorte que les ponts de mesure sont alimentés avec une tension suffisante pour permettre une mesure fine de la position avec interpolation à l'intérieur de l'intervalle de mesure. Ce mode d'alimentation est maintenu pendant une durée ΔT1 prédéfinie, puis l'alimentation des ponts est débranchée.

Le signal Trig peut par exemple être déclenché en réaction à l'un des événements suivants: manipulation de l'une des touches 132 du calibre, signal de commande sur l'entrée sérielle 133 ou déplacement du capteur 5 par rapport à la règle. Ce déplacement peut par exemple être détecté au moyen d'une électrode magnétorésistive supplémentaire, non représentée, qui reste alimentée même lorsque les ponts de mesure sont débranchés, et dont les variations de courant sont mesurées pour générer le signal Trig.

La durée ΔT1 sera de préférence choisie suffisamment longue, par exemple 10 minutes, pour permettre une mesure et une lecture du résultat dans la plupart des situations. Cette durée est de préférence inférieure au délai d'attente avant la mise en veille ou l'arrêt des autres fonctions du calibre, par exemple de l'affichage. La lecture de la mesure effectuée est donc encore possible pendant un temps limité même après l'interruption de l'alimentation des électrodes.

Dans le cas d'un capteur ne permettant pas une détermination absolue de la position, cette dernière est de préférence mémorisée dans un registre temporaire, par exemple dans le compteur de position, lors des intervalles d'interruption de l'alimentation.

La solution présentée sur la figure 6 est efficace, mais nécessite une électrode magnétorésistive supplémentaire, hors du pont de mesure, et un circuit de détection de mouvement pour détecter les déplacements du capteur lorsque les ponts de mesure sont débranchés. Ces éléments occasionnent un surcoût et une consommation électrique supplémentaire. Par ailleurs, l'électronique de comptage de position doit obéir à des contraintes particulières pour conserver la position absolue lors du rétablissement de la tension d'alimentation des ponts de mesure.

La variante d'alimentation illustrée sur la figure 7 permet de remédier à ces inconvénients. Selon cette variante, les ponts de mesure sont alimentés pendant les intervalles de réduction d'alimentation au travers des résistances 101, 103, 105 et 107. Les ponts sont ainsi alimentés avec une tension égale à Uₚsb - U_{N}sb, cette différence étant choisie suffisante pour permettre au moins une détection des mouvements et une mesure grossière (sans interpolation de la position). Dès qu'un déplacement est détecté au moyen de cette mesure grossière, ou qu'une autre activité est détectée, un signal Trig est généré qui provoque l'activation du signal sb pendant une durée ΔT1 et le court-circuitage des résistances 101, 103, 105 et 107, en sorte que la tension complète U_{P}max-U_{N}min est rétablie aux bornes des ponts.

Par rapport à la variante illustrée sur la figure 6, cette solution simplifie la génération du signal Trig et résout le problème de perte de la référence de position lorsque les ponts de mesure ne sont pas alimentés. Il est donc possible d'appliquer des conditions plus strictes pour la génération du signal Trig, et de ne passer en mode d'alimentation complète des ponts de mesure que lorsque des déplacements d'amplitude et/ou de durée suffisante sont détectés. Toutefois, un courant électrique continue de circuler à travers les électrodes magnétorésistives 100 même lorsque le calibre est en mode de réduction d'alimentation.

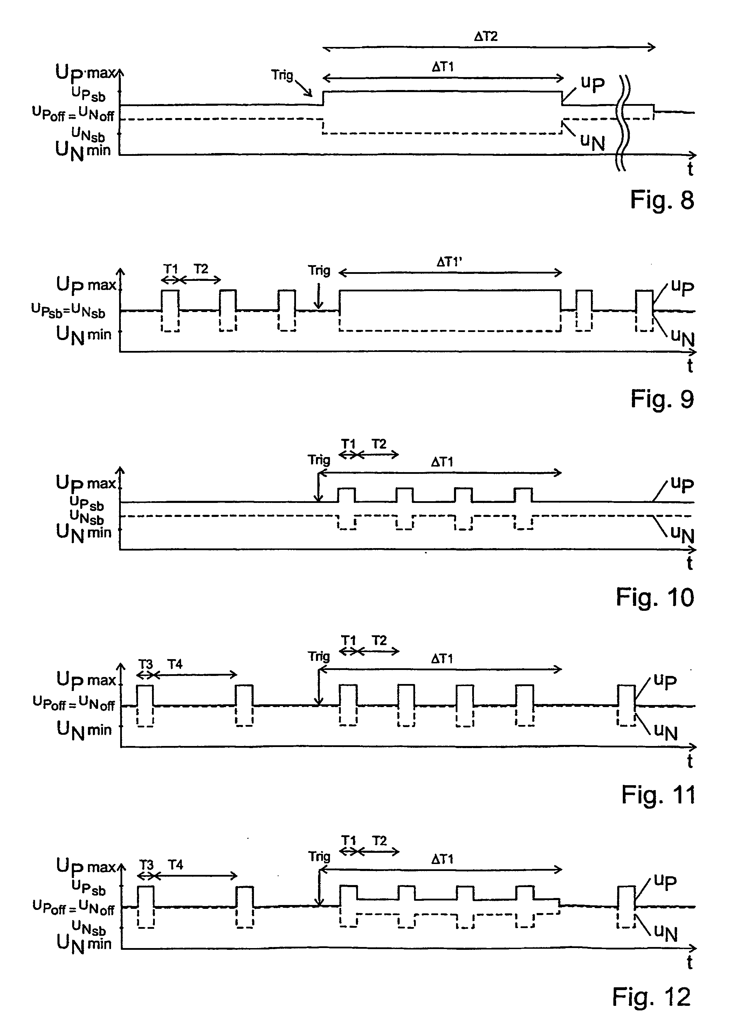

La figure 8 illustre une variante similaire à celle décrite en relation avec la figure 7, mais dans laquelle l'alimentation des ponts de mesure est complètement coupée après un intervalle ΔT2 plus long que ΔT1. Cette variante utilise donc trois modes différents d'alimentation des ponts:
■ un mode d'arrêt ("off"), dans lequel l'alimentation des ponts de mesure est complètement coupée lorsque aucun mouvement n'a été détecté depuis un intervalle ΔT2.
■ un mode de veille dans lequel l'alimentation des ponts de mesure est seulement réduite lorsque aucun mouvement n'a été détecté depuis un intervalle ΔT1.
■ un mode de mesure fine, permettant une mesure précise pendant un intervalle de durée ΔT1 immédiatement après la détection d'un mouvement ou d'une manipulation.

Le calibre passe du mode d'arrêt au mode de veille ou directement au mode de mesure fine par exemple suite à une manipulation d'une des touches du calibre. Il est en outre possible de mettre d'autres éléments du calibre, par exemple l'affichage, en mode de veille ou d'arrêt après un intervalle ΔT3 non représenté et supérieur à ΔT2.

La figure 9 illustre une autre variante d'alimentation similaire à celle décrite en relation avec la figure 7, mais dans laquelle l'alimentation des ponts de mesure est pulsée avec un rapport cyclique T1/(T1+T2) pendant les intervalles de réduction d'alimentation, de façon à permettre une détection des mouvements et le maintien de la position absolue avec une consommation minimale. L'alimentation complète et continue des ponts est rétablie pendant une durée ΔT1' lorsque, au cours d'un intervalle T1, un signal Trig indiquant par exemple la détection d'un déplacement est reçu.

Sur la figure 9, la tension aux bornes des ponts de mesure oscille entre (U_{P}max-U_{N}min) et 0 lorsque le calibre se trouve en mode de réduction d'alimentation pendant les intervalles T1. Dans une variante non représentée, il serait évidemment aussi possible d'appliquer pendant ces intervalles une tension (U_{P}sb-U_{N}sb) plus faible, juste suffisante pour effectuer une mesure grossière.

La figure 10 illustre une autre variante d'alimentation similaire à celle décrite en relation avec la figure 7, mais dans laquelle l'alimentation des ponts de mesure est pulsée, avec un rapport cyclique T1/(T1+T2), lorsque les ponts sont en mode de mesure fine pendant une durée ΔT1. Cette variante permet donc de détecter des déplacements et de mesurer la position avec une précision grossière en tout temps, et d'autoriser une mesure plus précise uniquement pendant une durée ΔT1 suivant la génération d'un signal Trig indiquant une manipulation du calibre.

Dans une variante préférentielle, les intervalles de durée T1 sont synchronisés avec les intervalles de rafraîchissement de l'affichage 12, de façon à permettre une mesure précise de la position pendant ou juste avant les périodes de rafraîchissement de la valeur de mesure indiquée sur l'affichage.

Dans la variante illustrée sur la figure 10, les ponts de mesure restent alimentés avec une tension U_{P}sb-U_{N}sb même lorsque aucun mouvement n'est détecté. L'homme du métier comprendra qu'il est aussi possible de passer en mode arrêt et de supprimer totalement cette alimentation après un intervalle ΔT1 ou ΔT2 suivant la génération d'un signal Trig.

La figure 11 illustre une autre variante d'alimentation des ponts de mesure similaire à celle décrite en relation avec la figure 10, mais dans laquelle les ponts de mesure sont alimentés en permanence avec une tension pulsée. Toutefois, le rapport cyclique augmente suite à la détection d'une manipulation indiquée par le signal Trig, et passe de T3/(T3+T4) à T1/(T1+T2). Dans une variante préférentielle, les intervalles de durée T1 sont synchronisés avec les intervalles de rafraîchissement de l'affichage 12, de façon à permettre une mesure précise de la position pendant ou juste avant les périodes de rafraîchissement de la valeur de mesure indiquée. Cette variante permet ainsi une mise à jour fréquente de la valeur de mesure affichée uniquement lorsque le circuit est en mode de mesure fine pendant une durée ΔT1 suite à la détection d'un événement indiquée par le signal Trig.

Sur la figure 11, la tension aux bornes des ponts oscille toujours entre (U_{P}max-U_{N}min) et 0. Dans une variante non représentée, il serait évidemment aussi possible d'appliquer une tension (U_{P}sb-U_{N}sb) plus faible, juste suffisante pour effectuer une mesure grossière, pendant les périodes T3 lorsque les ponts de mesure sont en mode de veille. En outre, il est possible, comme illustré sur la figure 12, de ne pas supprimer complètement la tension d'alimentation pendant les intervalles de durée T2 de réduction d'alimentation suite à l'enclenchement du signal Trig, de façon à réduire les sauts de tension et donc les pertes et les perturbations capacitives lors des mesures précises.

L'homme du métier comprendra qu'il est aussi possible, dans les variantes des figures 11 et 12, de supprimer totalement l'alimentation des ponts de mesure après un intervalle ΔT1 ou ΔT2 suivant la génération d'un signal Trig.

Dans une variante, le circuit 3 électronique comporte en outre un fréquencemètre non représenté qui détermine la fréquence du signal de mesure, et donc la vitesse de déplacement du capteur. Selon une caractéristique optionnelle de l'invention, le mode d'alimentation des ponts de mesure dépend de la fréquence détectée, en sorte que, lorsque le capteur se déplace rapidement, le rapport cyclique T1/(T1+T2) augmente.

Le rapport cyclique peut en outre être commandé par un circuit non représenté de détection de l'état de charge de la batterie 110 alimentant le circuit électronique : lorsque la batterie fournit une tension en-dessous d'un minimum prédéfini, le rapport cyclique ou la tension aux bornes des ponts diminue afin de réduire la consommation.

On comprendra par ailleurs que les différentes variantes évoquées ici peuvent être combinées entre elles, et qu'il est ainsi possible de prévoir des variantes d'alimentation des électrodes magnétorésistives utilisant deux ou davantage de modes distincts, chaque mode pouvant utiliser des tensions différentes et une alimentation continue ou pulsée avec différents rapports cycliques. Par ailleurs, différentes conditions peuvent être prévues pour passer d'un mode à un autre, telles que détection d'un déplacement ou d'une manipulation indiquée par un ou plusieurs signaux Trig, modification de la fréquence du signal de mesure, modification de l'état de charge de la batterie, comptage d'un timer de durée ΔTi variable et déclenchés depuis différents événements, par exemple depuis le signal Trig, ou indications dans au moins un registre de commande approprié dans le circuit 3. Le registre de commande peut par exemple indiquer la résolution de mesure désirée par l'utilisateur.

Il est ainsi par exemple possible de programmer un même circuit pour fonctionner selon différents modes d'alimentation, afin par exemple d'optimiser la consommation électrique en fonction de l'utilisation prévue. Cette programmation peut être effectuée soit par logiciel, sous la commande du processeur 6, soit lors du montage (bonding) du capteur 5 et/ou du circuit de mesure 3 sur la plaque de circuit imprimé 115, en imposant des tensions particulières sur certaines pattes du capteur et/ou du circuit de mesure.

Par ailleurs, toutes les variantes illustrées montrent dans un souci de simplification des signaux d'alimentation u_{P} et u_{N} de forme rectangulaire. On comprendra néanmoins que l'invention peut aussi être appliquée à des calibres utilisant des signaux d'alimentation de forme quelconque, par exemple sinusoïdaux, triangulaires, etc.. Il est aussi possible dans le cadre de cette invention de modifier la forme des signaux d'alimentation selon le mode dans lequel se trouve le calibre, par exemple de détecter des déplacements en mode de veille au moyen de trains d'impulsions rectangulaires, et d'employer des signaux d'alimentation de forme sinusoïdale dès qu'un déplacement ou une manipulation a été détecté.

D'autres modes d'alimentation des électrodes magnétorésistives 100 peuvent être imaginés selon le capteur utilisé, par exemple des alimentations en courant, des alimentations non différentielles, etc.. Par ailleurs, dans le cas d'un circuit comprenant plusieurs ponts de mesure, il est possible dans le cadre de cette invention d'alimenter ces différents ponts selon des modes différents.

Comme mentionné, le circuit de mesure 3 comporte des amplificateurs d'entrée différentiels non représentés pour amplifier les signaux différentiels s-s' et c-c' provenant des deux ponts de mesure 100. Dans une variante préférentielle de l'invention, ces amplificateurs peuvent être commandés pour fonctionner selon deux modes qui se distinguent par une consommation électrique et un niveau de bruit différents. On commandera donc de préférence les amplificateurs pour fonctionner selon le mode à faible bruit et à haute consommation uniquement pendant les intervalles ΔT1 suivant la génération du signal Trig.

Bien que le circuit décrit s'avère particulièrement avantageux dans un dispositif de mesure de dimension portable tel que pied à coulisse ou micromètre par exemple, son utilisation est naturellement aussi possible dans tout type de dispositif fixe ou mobile de mesure de dimension longitudinale ou angulaire.

## Revendications

1. Dispositif de mesure de dimension (1) comprenant :
une règle (21) munie d'une succession de régions magnétisées (23, 24),
un capteur (5) apte à être déplacé parallèlement face à la règle (21) et muni d'un réseau d'électrodes magnétorésistives (100) reliées de manière à constituer au moins un pont de mesure,
un circuit pour alimenter électriquement ledit au moins un pont de mesure et pour fournir au moins une grandeur dépendant d'au moins un signal de sortie dudit au moins un pont de mesure,
ledit circuit étant réalisé de manière à pouvoir alimenter ledit au moins un pont de mesure selon un premier mode ou selon un deuxième mode,
lesdits modes se distinguant l'un de l'autre par la tension générée par ledit circuit et appliquée entre les bornes dudit au moins un pont de mesure,
la tension appliquée entre les bornes dudit au moins un pont de mesure dans ledit premier mode étant inférieure à la tension appliquée aux bornes dudit au moins un pont de mesure dans ledit deuxième mode,
ledit deuxième mode permettant une mesure plus fine que ledit premier mode,
**caractérisé en ce que** la tension appliquée entre les bornes dudit au moins un pont de mesure dans ledit premier mode est suffisante pour permettre la détection de déplacements dudit capteur par rapport à ladite règle,
ledit dispositif comportant un circuit de génération d' un signal (Trig) en réponse à une manipulation du dispositif,
ledit circuit étant arrangé pour passer dudit premier mode audit deuxième mode en réponse à la génération dudit signal.

2. Dispositif selon l'une des revendications précédentes, ledit circuit de génération d'un signal étant équipé pour générer ledit signal (Trig) en réponse à la détection d'un déplacement dudit capteur par rapport à ladite règle.

3. Dispositif selon l'une des revendications précédentes, comprenant au moins une touche de commande, ledit circuit de génération d'un signal étant équipé pour générer ledit signal (Trig) en réponse à la manipulation de l'une desdites au moins une touche de commande.

4. Dispositif selon l'une des revendications précédentes, comprenant au moins une interface sérielle, ledit circuit de génération d'un signal étant équipé pour générer ledit signal (Trig)en réponse à un signal de commande sur ladite interface sérielle.

5. Dispositif selon l'une des revendications précédentes, dans lequel la tension générée par ledit circuit dans ledit premier mode est pulsée et la tension générée par ledit circuit dans ledit deuxième mode est continue.

6. Dispositif selon l'une des revendications 1 à 6, dans lequel la tension générée par ledit circuit dans ledit premier mode est continue et la tension générée par ledit circuit dans ledit deuxième mode est pulsée.

7. Dispositif selon l'une des revendications 1 à 6, dans lequel la tension générée par ledit circuit dans ledit premier mode est pulsée avec un premier rapport cyclique et la tension générée par ledit circuit dans ledit deuxième mode est pulsée avec un deuxième rapport cyclique différent dudit premier rapport cyclique.

8. Dispositif de mesure selon l'une des revendications de 5 à 7, **caractérisé en ce que** le rapport de cycle opératoire entre les intervalles d'alimentation et les intervalles de réduction d'alimentation dépend de la fréquence du signal d'entrée.

9. Dispositif selon l'une des revendications 8 à 10, comprenant un affichage de ladite mesure, ledit affichage étant rafraîchi périodiquement, et dans lequel les intervalles d'alimentation desdits ponts de mesure au cours dudit deuxième mode sont synchronisés avec les intervalles de rafraîchissement de l'affichage, de façon à permettre une mesure précise de la position pendant ou juste avant les périodes de rafraîchissement de la valeur de mesure indiquée

10. Dispositif selon l'une des revendications précédentes, dans lequel la forme des signaux d'alimentation desdits ponts de mesure dans lesdits premiers et deuxièmes modes est différente.

11. Dispositif selon l'une des revendications précédentes, qui retourne dans ledit premier mode après un intervalle (ΔT1) prédéfini.

12. Dispositif selon l'une des revendications précédentes, dans lequel l'alimentation desdits ponts de mesure est complètement coupée après un intervalle prédéfini (ΔT2) suite à ladite détection d'un déplacement dudit capteur par rapport à ladite règle.

13. Dispositif de mesure selon l'une des revendications précédentes, dans lequel le mode d'alimentation adopté dépend de la vitesse de déplacement dudit capteur.

14. Dispositif de mesure selon l'une des revendications précédentes, comprenant une batterie (110) pour l'alimenter de manière autonome et un circuit (46) de détection de l'état de charge de ladite batterie (110), le mode d'alimentation adopté dépendant dudit état de charge.

15. Dispositif de mesure selon l'une des revendications précédentes, comprenant au moins un registre de commande, et dans lequel le mode d'alimentation adopté dépend de l'état d'au moins un desdits registres de commande.

16. Dispositif de mesure selon la revendication précédente, dans lequel un desdits registres de commande indique la résolution désirée par l'utilisateur.

17. Dispositif de mesure selon l'une des revendications précédentes, dans lequel la tension d'alimentation est fournie entre deux bornes externes (Up, Un) dudit au moins un pont de mesure,
une borne (Up) étant alimentée avec un potentiel maximal (Upₘₐₓ) et l'autre (Un) avec un potentiel minimal lorsque ledit au moins un pont de mesure est alimenté,
les deux bornes étant alimentées avec un potentiel intermédiaire lorsque la tension appliquée est réduite.

18. Dispositif de mesure selon la revendication précédente, dans lequel lesdits ponts de mesure sont reliés auxdites bornes externes au travers d'au moins une résistance (101, 103, 105, 107), au moins un interrupteur (102, 104, 106, 108) permettant de court-circuiter au moins une desdites résistances lorsque le potentiel maximal doit être appliqué auxdits ponts de mesure.

## Claims

1. Dimension-measuring device (1) comprising:
a scale (21) provided with a series of magnetized areas (23, 24),
a sensor (5) capable of being displaced parallel and opposite the scale (21) and provided with a network of magneto-resistive electrodes (100) connected so as to constitute at least one measuring bridge,
a circuit for electrically feeding said at least one measuring bridge and to supply at least one value dependent on the at least one output signal to said at least one measuring bridge,
said circuit being realized in such a manner as to being able to feed said at least one measuring bridge according to a first mode or according to a second mode,
said modes being distinguished from one another by the voltage generated by said circuit and applied between the terminals of said at least one measuring bridge,
the voltage applied between the terminals of said at least one measuring bridge in said first mode being lower than the voltage applied to the terminals of said at least one measuring bridge in said second mode,
said second mode allowing a finer measurement than said first mode,
**characterized in that** the voltage applied between the terminals of said at least one measuring bridge in said first mode is sufficient for allowing the displacements of said sensor relative to said scale to be detected,
said device comprising a circuit for generating a signal (Trig) in response to a handling of the device,
said circuit being arranged to pass from said first mode to said second mode in response to the generation of said signal.

2. Device according to one of the preceding claims, said signal generation circuit being equipped for generating said signal (Trig) in response to a displacement of said sensor relative to said scale being detected.

3. Device according to one of the preceding claims, comprising at least one control button, said signal generation circuit being equipped for generating said signal (Trig) in response to the handling of one of said at least one control buttons.

4. Device according to one of the preceding claims, comprising at least one serial interface, said signal generation circuit being equipped for generating said signal (Trig) in response to a control signal on said serial interface.

5. Device according to one of the preceding claims, wherein the voltage generated by said circuit in said first mode is pulsed and the voltage generated by said circuit in said second mode is continuous.

6. Device according to one of the claims 1 to 6, wherein the voltage generated by said circuit in said first mode is continuous and the voltage generated by said circuit in said second mode is pulsed.

7. Device according to one of the claims 1 to 6, wherein the voltage generated by said circuit in said first mode is pulsed with a first cycle ratio and the voltage generated by said circuit in said second mode is pulsed with a second cycle ratio different from said first cycle ratio.

8. Measuring device according to one of the claims 5 to 7, **characterized in that** the operating cycle ratio between the feed intervals and the feed-reduction intervals depends on the frequency of the input signal.

9. Device according to one of the claims 8 to 10, comprising a display of said measurement, said display being periodically refreshed and wherein the feed intervals of said measuring bridges during the second mode are synchronized with intervals during which the display is refreshed so as to allow an accurate measuring of the position during or just before the periods during which the measurement value indicated is refreshed.

10. Device according to one of the preceding claims, wherein the shape of the feed signals of said measuring bridges in said first and second modes is different.

11. Device according to one of the preceding claims, that returns in said first mode after a predefined interval (ΔT1).

12. Device according to one of the preceding claims, wherein the feeding of said measuring bridges is completely cut after a predefined interval (ΔT2) following said detection of a displacement of said sensor relative to said scale.

13. Measuring device according to one of the preceding claims, wherein the adopted feed mode depends on the speed of displacement of said sensor.

14. Measuring device according to one of the preceding claims, comprising a battery (110) for powering it autonomously and a circuit (46) for detecting the charge level of said battery (110), the adopted feed mode depending on said charge level.

15. Measuring device according to one of the preceding claims, comprising at least one control register and wherein the adopted feed mode depends on the state of at least one of said control registers.

16. Measuring device according to the preceding claim, wherein one of said control registers indicates the resolution selected by the user.

17. Measuring device according to one of the preceding claims, wherein the feed voltage is supplied between two external terminals (Up, Un) of said at least one measuring bridge,
a terminal (Up) being fed with a maximum potential (Upₘₐₓ) and the other (Un) with a minimal potential when said at least one measuring bridge is fed,
the two terminals being fed with an intermediate potential when the applied voltage is reduced.

18. Measuring device according to the preceding claim, wherein said measuring bridges are connected to said external terminals through at least one resistance 8101, 103, 105, 107), at least one switch (102, 104, 106, 108) enabling at least one of said resistances to be short-circuited when the maximum potential must be applied to said measuring bridges.

## Patentansprüche

1. Messvorrichtung (1) umfassend:
ein Lineal (21), mit einer Folge von magnetisierten Regionen (23, 24) versehen,
einen Sensor (5), der parallel gegenüber dem Lineal (21) verschoben werden kann und mit einem Netzwerk von magnetoresistiven Elektroden (100) versehen ist, welche verbunden sind, um mindestens eine Messbrücke zu bilden,
einen Schaltkreis, um besagte mindestens eine Messbrücke elektrisch zu speisen und um mindestens eine von mindestens einem Ausgangssignal besagter mindestens einer Messbrücke abhängige Grösse zu liefern,
wobei besagter Schaltkreis so ausgeführt ist, dass er besagte mindestens eine Messbrücke gemäss einem ersten Modus oder gemäss einem zweiten Modus speisen kann,
wobei besagte Moden sich von einander durch die Spannung unterscheiden, die von besagtem Schaltkreis generiert und zwischen den Terminals besagter mindestens einer Messbrücke angelegt wird,
wobei die zwischen den Terminals besagter mindestens einer Messbrücke in besagtem ersten Modus angelegte Spannung niedriger ist als die an den Terminals besagter mindestens einer Messbrücke in besagtem zweiten Modus angelegte Spannung,
wobei besagter zweite Modus eine feinere Messung als besagter erste Modus erlaubt,
**dadurch gekennzeichnet, dass** die zwischen den Terminals besagter mindestens einer Messbrücke in besagtem ersten Modus angelegte Spannung genügend ist, um das Erkennen von Verschiebungen besagtes Sensors in Bezug auf besagtes Lineal zu erlauben,
wobei besagte Vorrichtung einen Schaltkreis zum Erzeugen von Signalen (Trig) in Antwort auf eine Bedienung der Vorrichtung umfasst,
wobei besagter Schaltkreis so angeordnet ist, um von besagtem ersten Modus in besagten zweiten Modus in Antwort auf das Generieren besagtes Signals zu wechseln.

2. Vorrichtung gemäss einem der vorhergehenden Ansprüche, wobei besagter Signalerzeugungsschaltkreis so ausgerüstet ist, um besagtes Signal (Trig) in Antwort auf das Erkennen einer Verschiebung besagtes Sensors in Bezug auf besagtes Lineal zu generieren.

3. Vorrichtung gemäss einem der vorhergehenden Ansprüche, umfassend mindestens eine Kontrolltaste, wobei besagter Signalerzeugungsschaltkreis ausgerüstet ist, um besagten Signal (Trig) in Antwort auf die Bedienung einer besagter mindestens einer Kontrolltaste zu generieren.

4. Vorrichtung gemäss einem der vorhergehenden Ansprüche, umfassend mindestens eine serielle Schnittstelle, wobei besagter Signalerzeugungsschaltkreis ausgerüstet ist, um besagtes Signal (Trig) in Antwort auf einem Befehlssignals auf besagter seriellen Schnittstelle zu generieren.

5. Vorrichtung gemäss einem der vorhergehenden Ansprüche, worin die von besagtem Schaltkreis in besagtem ersten Modus generierte Spannung pulsiert ist und die von besagtem Schaltkreis in besagtem zweiten Modus generierte Spannung eine Gleichspannung ist.

6. Vorrichtung gemäss einem der Ansprüche 1 bis 6, worin besagte von besagtem Schaltkreis in besagtem ersten Modus generierte Spannung eine Gleichspannung ist und die von besagtem Schaltkreis in besagtem zweiten Modus generierte Spannung pulsiert ist.

7. Vorrichtung gemäss einem der Ansprüche 1 bis 6, worin die von besagtem Schaltkreis in besagtem ersten Modus generierte Spannung mit einem ersten zyklischen Verhältnis pulsiert ist und die von besagtem Schaltkreis in besagtem zweiten Modus generierte Spannung mit einem zweiten zyklischen Verhältnis, der anders als besagtes erste zyklische Verhältnis ist, pulsiert ist.

8. Messvorrichtung gemäss einem der Ansprüche 5 bis 7, **dadurch gekennzeichnet, dass** das Betriebszyklusverhältnis zwischen den Speisungsintervallen und den Speiseverringerungsintervallen von der Frequenz des Eingangssignals abhängig ist.

9. Vorrichtung gemäss einem der Ansprüche 8 bis 10, umfassend ein Anzeigen besagter Messung, wobei besagtes Anzeigen periodisch aufgefrischt wird, und worin die Speisungsintervallen besagter Messbrücken während besagtem zweiten Modus synchronisiert werden mit den Anzeigeauffrischungsintervallen, um eine genaue Messung der Position während oder gerade vor den Perioden, währen denen der angegebene Messwert aufgefrischt wird, zu erlauben.

10. Vorrichtung gemäss einem der vorhergehenden Ansprüche, worin die Form der Signale zur Speisung besagter Messbrücken in besagten ersten und zweiten Moden verschieden ist.

11. Vorrichtung gemäss einem der vorhergehenden Ansprüche, welche in besagten ersten Modus nach einem vorbestimmten Intervall (ΔT1) zurückkehrt.

12. Vorrichtung gemäss einem der vorhergehenden Ansprüche, worin die Speisung besagter Messbrücken nach einem vorbestimmten Intervall (ΔT2) nach besagtem Erkennen einer Verschiebung besagtes Sensors in Bezug auf besagtem Lineal vollständig unterbrochen wird.

13. Messvorrichtung gemäss einem der vorhergehenden Ansprüche, worin der gewählte Speisungsmodus von der Geschwindigkeit der Verschiebung besagtes Sensors abhängig ist.

14. Messvorrichtung gemäss einem der vorhergehenden Ansprüche, umfassend eine Batterie (110), um sie autonom zu speisen, und einen Schaltkreis (46) zum Erkennen des Ladezustands besagter Batterie (110), wobei der gewählte Speisungsmodus von besagtem Ladezustand abhängig ist.

15. Messvorrichtung gemäss einem der vorhergehenden Ansprüche, umfassend mindestens ein Kontrollregister, und worin der gewählte Speisungsmodus vom Zustand mindestens eines besagten Kontrollregisters abhängig ist.

16. Messvorrichtung gemäss dem vorhergehenden Anspruch, worin eines der besagten Kontrollregister die vom Benutzer gewünschte Auflösung angibt.

17. Messvorrichtung gemäss einem der vorhergehenden Ansprüche, worin die Speisespannung zwischen zwei externen Terminals (Up, Un) besagter mindestens einer Messbrücke geliefert wird,
wobei ein Terminal (Up) mit einem maximalen Potential (Upₘₐₓ) und das andere (Un) mit einem minimalen Potential versorgt wird, wenn besagte mindestens eine Messbrücke gespeist wird,
wobei beide Terminals mit einem Zwischenpotential gespeist werden, wenn die angelegte Spannung reduziert ist.

18. Messvorrichtung gemäss dem vorhergehenden Anspruch, worin besagte Messbrücken an besagten externen Terminals durch mindestens einen Widerstand (101, 103, 105, 107) verbunden sind, wobei mindestens ein Schalter (102, 104, 106, 108) es erlaubt, mindestens einen der besagten Widerstände auszuschalten, wenn das maximale Potential an besagten Messbrücken angelegt werden muss.
